(19) **Europäisches Patentamt**

**European Patent Office**

**Office européen des brevets**

(11) Veröffentlichungsnummer: **0 256 218 B1**

(12) **EUROPÄISCHE PATENTSCHRIFT**

(45) Veröffentlichungstag der Patentschrift: 09.10.91

(51) Int. Cl.⁵: **C04B 35/58**

(21) Anmeldenummer: 87106846.6

(22) Anmeldetag: 12.05.87

(54) Sinterfähiges Siliziumnitrid-Pulver sowie Verfahren zu seiner Herstellung.

(30) Priorität: 24.05.86 DE 3617489

(43) Veröffentlichungstag der Anmeldung:
24.02.88 Patentblatt 88/08

(45) Bekanntmachung des Hinweises auf die
Patenterteilung:
09.10.91 Patentblatt 91/41

(84) Benannte Vertragsstaaten:
CH DE FR GB LI SE

(56) Entgegenhaltungen:
US-A- 4 073 845

SPRECHSAAL, Band 118, Nr. 6, Juni 1985,
Seiten 525-528, Coburg, DE; U. HAESE:
"Metallfreies Gegenstrahlmahlen keramischer Produkte und Gläser in Forschung
und Produktion"

(73) Patentinhaber: **BAYER AG**

W-5090 Leverkusen 1 Bayerwerk(DE)

(72) Erfinder: **Wickel, Ulrike, Dr.**
**Doerperhofstrasse 39**
**W-4150 Krefeld 1(DE)**
Erfinder: **Franz, Gerhard, Dr.**
**Erich-Klausener-Strasse 44**
**W-4150 Krefeld 1(DE)**
Erfinder: **Laubach, Benno, Dr.**
**Bodelschwinghstrasse 22**
**W-4150 Krefeld 1(DE)**

## Beschreibung

Die vorliegende Erfindung betrifft ein neues sinterfähiges $Si_3N_4$-Pulver mit einer mittleren Teilchengröße der Agglomerate von kleiner als 1 $\mu$m sowie Verfahren zur Herstellung dieser $Si_3N_4$-Pulver.

Für die Sinterfähigkeit von $Si_3N_4$-Pulvern ist neben der Reinheit, dem $\alpha$-$Si_3N_4$-Phasengehalt und der Teilchenform insbesondere die Teilchengröße von entscheidender Bedeutung.

Als gut sinterfähige Pulver solche mit einer BET-Oberfläche (Stickstoff-Methode) von größer als 10 $m^2$/g angesehen. Die mittlere Teilchengröße der Agglomerate soll dabei kleiner als 1 $\mu$m sein.

Darüber hinaus ist bekannt, daß sich harte Agglomerate bei der Sinterung extrem negativ auswirken. Pulver mit harten, aber wenig dichten Agglomeraten lassen sich nur zu geringen Gründichten verpressen. Das hat eine starke, nicht kontrollierbare Schrumpfung bei der Bauteilfertigung sowie lange Sinterzeiten und damit die Gefahr des Grobkornwachstums zur Folge. Außerdem können die groben Strukturen im Grünling, insbesondere die großen inneren Poren der Agglomerate, beim Sintern nicht mehr eleminiert werden, was die Festigkeitseigenschaften erheblich verschlechtert.

Bei den bekannten und industriell verwendeten Herstellungsverfahren fallen die $Si_3N_4$-Pulver in agglomerierter Form an. Die mittleren Agglomeratgröße, die z.B. mit Laserbeugungsmethoden bestimmt werden kann, liegt im allgemeinen zwischen 1 und 10 $\mu$m. Daher müssen diese $Si_3N_4$-Pulver vor der Sinterung desagglomeriert werden, um eine mittlere Teilchengröße der Agglomerate von kleiner als 1 $\mu$m zu erreichen.

Für die Desagglomerierung von $Si_3N_4$-Pulvern werden verschiedene Verfahren der Naßmahlung (Attritor-, Kugelmahlung usw.) empfohlen. Diese erweisen sich jedoch nur als bedingt geeignet. Die Agglomerate können zwar zerschlagen werden, jedoch läßt sich ein Abrieb von den Mahlkörpern nicht verhindern, so daß das $Si_3N_4$-Pulver während der Mahlung verunreingt wird. Beim Einsatz von keramischen Mahlkörpern (z.B. $Al_2O_3$, $ZRO_2$) wurden große splittrige Körner aufgefunden, die wahrscheinlich durch Abplatzungen von den Mahkugeln entstanden sind. Durch Verwendung von $Si_3N_4$-Mahkugeln könnte zwar eine echte Verunreinigung durch einen Fremdstoff vermieden werden.

Allerdings ist die Mahlwirkung von $Si_3N_4$-Kugeln relativ schwach, was zu sehr langen Mahldauern von mehreren Stunden und damit zu hohen Verfahrenskosten führt.

Neben den genannten negativen Auswirkungen auf das $Si_3N_4$-Pulver ist als genereller Nachteil von Naßmahlungen die Reagglomeration bei der Trocknung zu nennen. Trockenagglomerate können die Sinterfähigkeit der gemahlenen Pulver wieder erheblich verschlechtern.

Es wurde weiterhin vorgeschlagen (Alpine Aktuell Nr. 26 Firma Alpine/Augsburg) $Si_3N_4$ durch Mahlungen in Gegenstrahlmühlen zu desagglomerieren. So sollen dabei die $Si_3N_4$-Pulver in einer Fließbettgegenstrahlmühle soweit desagglomeriert werden, daß nach einer Siebung durch ein 10-$\mu$m-Sieb noch ein Rückstand von 1 % bleibt. Fließbettgegenstrahlmühlen besitzen jedoch einen bewegten Sichter, bei dem infolge der hohen Abrasivität des Siliciumnitridpulvers ein starker Verschleiß zu erwarten ist. Mahlversuche von $Si_3N_4$-Pulver mit einem Ausgangseisengehalt von kleiner als 100 ppm haben entsprechend eine Erhöhung des Eisengehaltes auf 500 ppm und damit eine deutliche, für gute $Si_3N_4$-Pulver nicht zulässige Verunreinigung ergeben.

Weiterhin wird im Sprechsaal 118 (6), 525-528 (1985) angegeben, daß in Gegenstrahlmühlen mit integriertem Sichter $Si_3N_4$ gemahlen und der Abrieb am Sichter vermieden werden kann. Allerdings ist es nach den aufgeführten Beispielen nicht möglich, die gewünschte Feinheit mit einer mittleren Teilchengröße von kleiner als 1 $\mu$m zu erreichen. Selbst bei wenig harten Materialien, wie z.B. Bleiglas, wird nach sechs Mahldurchgängen nur ein $d_{50}$-Wert von 1,5 $\mu$m erzielt. Aus der Literatur ist dazu sogar bekannt, daß sich die Dispersität kommerzieller $Si_3N_4$-Pulver durch Luftstrahlmahlungen kaum verändern ließe (Dissertation G. Wötting, Berlin 1983).

Aufgabe der vorliegenden Erfindung ist es, ein gut sinterfähiges $Si_3N_4$-Pulver bereitzustellen, welches nicht die Nachteile der nach den bekannten Verfahren hergestellten Pulver aufweist.

Überraschenderweise wurde nun gefunden, daß diese Forderungen erfüllt werden durch solche $Si_3N_4$-Pulver, in denen keine Teilchen mit einem Durchmesser von größer als 100 $\mu$m enthalten sind und die einen geringen Gehalt an metallischen Verunreinigungen aufweisen.

Gegenstand dieser Erfindung ist somit ein sinterfähiges $Si_3N_4$-Pulver mit einer mittleren Teilchengröße der Agglomerate von kleiner als 1 $\mu$m, wobei keine Teilchen mit einem Durchmesser von größer als 100 $\mu$m vorhanden sind, der Gesamtgehalt an metallischen Verunreinigungen kleiner als 1000 ppm insbesondere der Eisengehalt kleiner als 200 ppm ist.

Besonders bevorzugt ist ein solches erfindungsgemäßes $Si_3N_4$-Pulver, bei dem der Gesamtgehalt an metallischen Verunreingungen kleiner als 200 ppm ist. Dieses läßt sich besonders vorteilhaft aus einem $Si_3N_4$-Ausgangspulver herstellen, daß durch Umsetzung von $SiCl_4$ mit $NH_3$ gewonnen wurde.

Die erfindungsgemäßen $Si_3N_4$-Pulver zeigen

ein ausgezeichnetes Sinterverhalten und die daraus hergestellten keramischen Teile eine sehr hohe mechanische Festigkeit. Obwohl die aus dem Stand der Technik bekannten Pulver im allgemeinen die Forderung nach einer mittleren Teilchengröße von kleiner als 1 $\mu$m erfüllen, weisen diese nicht vergleichbar gute Eigenschaften auf.

Es wurde bei ihnen, wie Untersuchungen an kommerziellen Pulvern zeigen, der Freiheit von Überkorn keine große Bedeutung beigemessen.

Sind nur noch wenige Überkörner in einem Pulver vorhanden, können diese durch Laserbeugungsmethoden, Sedimentationsanalysen und ähnlichen, für die Bestimmung der Teichengrößenverteilungen üblichen Meßmethoden nicht mehr erfaßt werden.

Mit einem Grindometer nach Hegman können jedoch noch wenige im Pulver vorhandene Grobkörner nachgewiesen werden. Für Pigmente ist die Beurteilung der Körnigkeit mit einem Grindometer in der DIN 53 203 beschrieben. Auch wenn in bezug auf keramische Pulver keine entsprechende Norm existiert, so läßt sich das in der DIN 53 203 beschriebene Verfahren ebenso für die Beurteilung keramischer Materialien, insbesondere zur Bestimmung von Größe und Menge des Überkorns, verwenden. So zeigen Grindometermessungen an kommerziellen Pulvern, daß diese trotz mittlerer Teilchendurchmesser von z.T. kleiner als 1 $\mu$m immer einen störenden Anteil von Überkorn größer 100 $\mu$m und in vielen Fällen sogar größer 250 $\mu$m enthalten.

Es wurde gefunden, daß sich Spiralstrahlmahlungen zur Desagglomeration von $Si_3N_4$-Pulvern auf eine mittlere Teilchengröße von kleiner als 1 $\mu$m gut eignen.

Gegenstand der vorliegenden Erfindung ist somit auch ein Verfahren zur Herstellung des erfindungsgemäßen $Si_3N_4$-Pulvers, welches dadurch gekennzeichnet ist, daß agglomeriertes $Si_3N_4$-Pulver in einer Spiralstrahlmühle gemahlen wird.

Wider Erwarten sind die Pulver weitgehend überkornfrei, wie mit einem Grindometer nachgewiesen werden kann. Um metallische Verunreinigungen auszuschließen, können der Mahlkammerinnenraum, die Rohrleitungen, die Produkteintrittsdüse und sonstige Flächen, mit denen das $Si_3N_4$-Pulver in Berührung tritt, mit Kunststoff oder mit einem keramischen Material ausgekleidet bzw. aus einem entsprechenden Material gefertigt werden. Bewährt haben sich u.a. der sehr abriebfeste Kunststoff Vulkollan® und die verschleißarmen keramischen Werkstoffe $B_4C$, $Al_2O_3$, SiC und $Si_3N_4$.

Auch das gemahlene Pulver sollte nicht mehr mit Materialien in Kontakt kommen, die Verunreinigungen enthalten können. Vorzugsweise wird daher das gemahlene Pulver an einem Filtersack aus Nadelfilz, Kunststoffgewebe oder kunststoffbeschichtetem Gewebe abgeschieden.

Da bei der Zerschlagung verwachsener Agglomerate neue Oberflächen geschaffen werden, ist es von Vorteil, mit Stickstoff oder Argon als Mahlgas zu mahlen, um eine Sauerstoffkontamination zu vermeiden. Bei der Mahlung von nur schwach agglomerierten Pulvern, bei denen die BET durch die Mahlung kaum ansteigt, reicht jedoch Luft als Mahlgas aus. Die Mahlungen haben sich, je nach Agglomerathärte des Aufgabematerials, im allgemeinen bei einem Mahlgasdruck zwischen 4 und 6 bar hinsichtlich dem Kosten/Leistungs-Verhältnis am günstigsten erwiesen.

Bei gleichmäßiger Eindosierung, einem großen Düsenwinkel (über 30°) und einem Mahlgasdruck zwischen 2 und 10 bar können selbst große, harte Agglomerate an den erfindungsgemäßen Pulvern zerkleinert werden.

Im folgenden Beispiel wird die Erfindung beispielhaft erläutert, ohne daß hierin eine Einschränkung zu sehen ist.

Beispiel

$Si_3N_4$-Pulver mit einem Gesamtgehalt an metallischen Verunreinigungen von ca. 700 ppm, speziell mit einem Eisengehalt von ca. 100 ppm, einem durch Laserbeugung bestimmten mittleren Teilchendurchmesser von $D_{50}$ = 1 $\mu$m und einem mit einem Hegmann-Grindometer nachweisbaren maximalen Korndurchmesser von 200 $\mu$m wurde in einer Spiralstrahlmühle gemahlen. Der Mahldruck betrug 2 bar, die Durchsatzleistung ca. 120 g/h, das Mahlgas war Preßluft. Der Mahlkammerinnenraum war mit Vulkollan® ausgekleidet. Die Produktabscheidung erfolgt an einem Filtersack aus Dralongewebe.

Für das gemahlene Pulver 1 wurde ein Eisengehalt von 120 ppm bestimmt. Der mittlere Teilchendurchmesser liegt nach der Mahlung bei ca. 0,5 $\mu$m, die mit einem Hegmann-Grindometer nachweisbare maximale Korngröße bei 80 $\mu$m. Die Teilchengrößenverteilungen in der Fig. zeigen deutlich die durch die Mahlung erfolgte Desagglomeration des Ausgangspulvers 1. Die Teilchengrößendurchmesser sind dabei auf der Abzisse aufgetragen, auf der Ordinate die Volumen-Prozente.

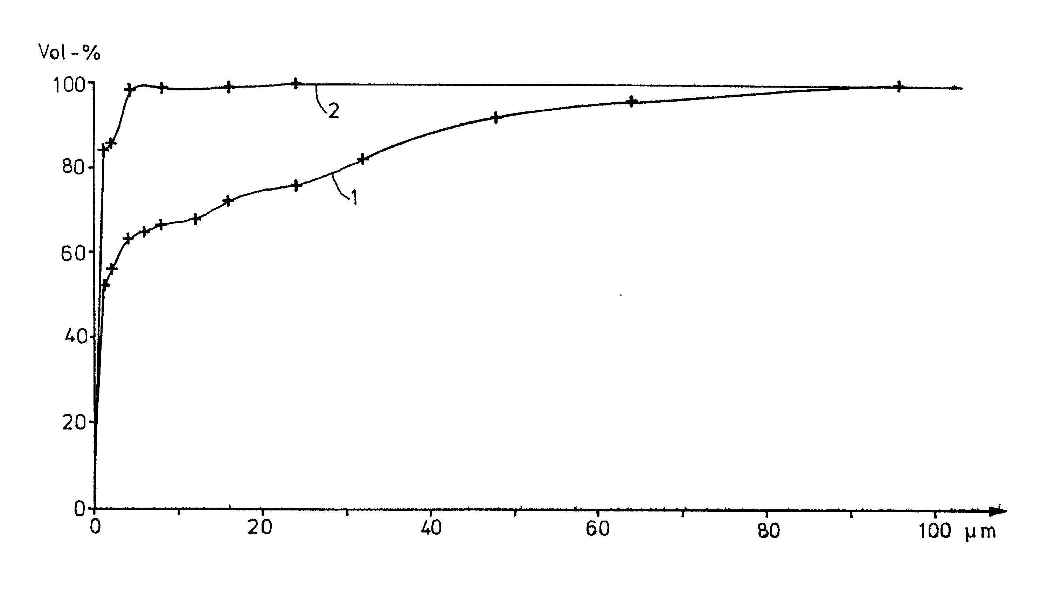

**Patentansprüche**

1. Sinterfähiges $Si_3N_4$-Pulver mit einer mittleren Teilchengröße der Agglomerate von kleiner als 1 $\mu$m, dadurch gekennzeichnet, daß keine Teilchen mit einem Durchmesser von größer als 100 $\mu$m vorhanden sind, der Gesamtgehalt an metallischen Verunreinigungen kleiner als 1000 ppm und insbesondere der Eisengehalt kleiner als 200 ppm ist.

**2.** Sinterfähiges Si₃N₄-Pulver gemäß Anspruch 1, dadurch gekennzeichnet, daß der Gesamtgehalt an metallischen Verunreinigungen kleiner als 200 ppm ist.

**3.** Sinterfähiges Si₃N₄-Pulver gemäß einem der Ansprüche 1 oder 2, dadurch gekennzeichnet, daß das Si₃N₄-Pulver durch Umsetzung von SiCl₄ mit NH₃ erhalten wurde.

**4.** Verfahren zur Herstellung von sinterfähigem Si₃N₄-Pulvergemäß einem der Ansprüche 1 oder 2, dadurch gekennzeichnet, daß ein agglomeriertes Si₃N₄-Pulver in einer Spiralstrahlmühle gemahlen wird.

**5.** Verfahren gemäß Anspruch 4, dadurch gekennzeichnet, daß die Mahlkammer, die Rohrleitungen, die Produkteintrittsdüse und andere Mühlenteile, mit denen das Produkt in Berührung kommt, aus einem nichtmetallischen Werkstoff hergestellt sind.

**6.** Verfahren gemäß Anspruch 5, dadurch gekennzeichnet, daß der nichtmetallische Werkstoff Kunststoff und/oder ein keramisches Material ist.

**7.** Verfahren gemäß Anspruch 6, dadurch gekennzeichnet, daß der Kunststoff Vulkollan® ist.

**8.** Verfahren gemäß Anspruch 6, dadurch gekennzeichnet, daß das keramische Material B₄C und/oder Al₂O₃ und/oder SiC und/oder Si₃N₄ ist.

**9.** Verfahren gemäß einem oder mehrerer der Ansprüche 4 bis 8, dadurch gekennzeichnet, daß das gemahlene Pulver an einem Filtersack aus Nadelfilz, Kunststoffgewebe oder kunststoffbeschichtetem Gewebe abgeschieden wird.

**10.** Verfahren gemäß einem oder mehrerer der Ansprüche 4-9, dadurch gekennzeichnet, daß während der Mahlung als Mahlgas Luft, Stickstoff oder Argon verwendet wird.

**11.** Verfahren gemäß Anspruch 10, dadurch gekennzeichnet, daß der Druck des Mahlgases zwischen 2 und 10 bar Überdruck beträgt.

## Claims

**1.** Sinterable Si₃N₄ powder having an average particle size of the agglomerates of less than 1 μm, characterised in that no particles having a diameter greater than 100 μm are present, the total content in metallic impurities is less than 1000 ppm and in particular the iron content is less than 200 ppm.

**2.** Sinterable Si₃N₄ powder according to claim 1, characterised in that the total content in metallic impurities is less than 200 ppm.

**3.** Sinterable Si₃N₄ powder according to one of the claims 1 or 2, characterised in that the Si₃N₄ powder was obtained by the reaction of SiCl₄ with NH₃.

**4.** A process for the preparation of sinterable Si₃N₄ powder according to one of the claims 1 or 2, characterised in that an agglomerated Si₃N₄ powder is milled in a spiral jet mill.

**5.** A process according to claim 4, characterised in that the grinding chamber, the pipes, the product inlet nozzle and other parts of the mill with which the product comes into contact is fabricated from a nonmetallic material.

**6.** A process according to claim 5, characterised in that the nonmetallic matertial is a plastic and/or a ceramic material.

**7.** A process according to claim 6, characterised in that the plastic is Vulkollan ᴿ.

**8.** A process according to claim 6, characterised in that the ceramic material is B₄C and/or Al₂O₃ and/or SiC and/or Si₃N₄.

**9.** A process according to one of more of claims 4 to 8, characterised in that the milled powder is deposited on a filter sack of needlefelt, plastic fabric or plasticcoated fabric.

**10.** A process according to one or more of claims 4-9, characterised in that air, nitrogen or argon is used as milling gas during the milling process.

**11.** A process according to claim 10, characterised in that the pressure of the milling gas is an excess pressure of from 2 to 10 bar.

## Revendications

**1.** Poudre de Si₃N₄ frittable dont tes agglomérats ont une granulométrie moyenne inférieure à 1 μm, caractérisée en ce qu'aucune particule de diamètre supérieur à 100 μm n'est présente, que la teneur totale en impuretés métalliques est inférieure à 1 000 ppm et notamment que la teneur en fer est inférieure à 200 ppm.

2. Poudre de $Si_3N_4$ frittabte selon ta revendication 1, caractérisée en ce que ta teneur totale en impuretés métalliques est inférieure à 200 ppm.

3. Poudre de $Si_3N_4$ frittabte se ton l'une quelconque des revendications 1 ou 2, caractérisée en ce que la poudre de $Si_3N_4$ a été obtenue par réaction entre $SiCl_4$ et $NH_3$.

4. Procédé de fabrication d'une poudre de $Si_3N_4$ frittable selon l'une des revendications 1 ou 2, caractérisé en ce qu'une poudre de $Si_3N_4$ agglomérée est broyée dans un broyeur à jets en spirale.

5. Procédé selon la revendication 4, caractérisé en ce que la chambre de broyage, les conduits, la buse d'admission et les autres pièces du broyeur avec lesquelles le produit entre en contact sont en un matériau non métallique.

6. Procédé selon la revendication 5, caractérisé en ce que le matériau non métallique est un plastique et/ou un matériau céramique.

7. Procédé selon la revendication 6, caractérisé en ce que te plastique est du Vulkollan®.

8. Procédé selon la revendication 6, caractérisé en ce que le matériau céramique est $B_4c$ et/ou $Al_2O_3$ et/ou SiC et/ou $Si_3N_4$.

9. Procédé selon une ou plusieurs des revendications 4 à 8, caractérisé en ce que ta poudre broyée est séparée sur un filtre à sacs en feutre aiguilleté, en tissu plastique ou en un tissu enduit de plastique.

10. Procédé selon une ou plusieurs des revendications 4 à 9, caractérisé en ce qu'on utilise comme gaz de broyage de l'air, de l'azote ou de l'argon au cours du broyage.

11. Procédé selon la revendication 10, caractérisé en ce que la pression du gaz de broyage atteint une pression manométrique comprise entre 2 et 10 bar.

Vol -%

EP 0 256 218 B1